# EUROPEAN PATENT APPLICATION

(11) **EP 3 171 042 A1**
(43) Date of publication of application: **24.05.2017**
(21) Application number: 16199309.2
(22) Date of filing: 17.11.2016
(51) Int. Cl.: F16B 31/04, B23P 19/06, F16B 5/02

(54) **LOCKING SYSTEM FOR TIE ROD**

(30) Priority: 17.11.2015 IT UB20155664
(71) Applicant: DANIELI & C. OFFICINE MECCANICHE S.p.A., 33042 Buttrio (IT)
(72) Inventor: POLONI, Alfredo, 34070 FOGLIANO REDIPUGLIA (IT); ANSOLDI, Marco, 33100 UDINE (IT); RAFFAGLIO, Yuri, 33010 TAVAGNACCO (IT)
(74) Representative: Celona, Antonio

(57) **Abstract**

A tie rod (1) defining a longitudinal axis and comprising locking elements for locking the ends of the tie rod to respective end supports (2, 2'), the tie rod being able to cross said end supports (2, 2'); wherein locking elements comprise, at each end support (2, 2'), a first multi jackbolt tensioner (3) and adjustment means for adjusting the position of the tie rod with respect to said end support; and wherein, in a configuration with tie rod locked at the end, said first multi jackbolt tensioner (3) is arranged at an outer side of the respective end support, while said tie rod position adjustment means are arranged at an inner side of the respective end support.

## Description

### Field of the invention

The present invention relates to a tie rod provided with a locking system at the ends, usable in a suspension system, for example.

### Background art

Various tie rod applications are known and used in a wide range of applications.

An example of these applications is the use of tie rods in suspension systems connecting a tilting Basic Oxygen Furnace (B.O.F.) to its respective trunnion ring. In these applications, the tie rods are fixed to at least one of the ends by means of ball joints.

Disadvantageously, the tie rods of known type require long installation times. Furthermore, the constraints must be mechanically cut to disassemble these tie rods.

The tie rods are fixed to end fixed supports which have resting surfaces which may have manufacturing errors, resulting in very inaccurate parallelism tolerances and/or shape irregularities, and which because of the working temperatures of the machine may be deformed over time causing a discontinuous resting of the locking elements and consequent detrimental clearances for the wear resistance and stability of the tie rod. A solution to solve such a drawback is obtained by using ball joints to ensure the correct alignment and the correct unloading of the forces, but this contrivance also determines a non-negligible maintenance of these joints, together with their constant greasing and their preventive replacement as a consequence of the working conditions to which they are subjected.

The need is thus felt to make a tie rod which can overcome the aforesaid drawbacks while ensuring a correct distribution of the forces with no need for maintenance.

### Summary of the invention

It is the main object of the present invention to make a tie rod provided with locking elements at the ends configured so as to make installation and possible removal thereof quick and easy, eliminating the necessary maintenance.

It is another object of the invention to make a tie rod which allows to eliminate the misalignment errors with respect to the resting surfaces and which may adapt to the deformations of such surfaces, while ensuring the correct distribution of forces. The present invention, therefore, achieves the objects discussed above making a tie rod which, in accordance with claim 1, defines a longitudinal axis and comprises locking elements for locking the ends of the tie rod to respective end supports, the tie rod being able to cross said end supports; wherein said locking elements comprise, at each end support, a first multi jackbolt tensioner and adjustment means for adjusting the position of the tie rod with respect to said end support; and wherein, in a configuration with tie rod locked at the ends, said first multi jackbolt tensioner is arranged at an outer side of the respective end support, while said tie rod position adjustment means are arranged at an inner side of the respective end support.

According to another aspect of the invention, a suspension system is provided connecting a first element to a second element, comprising a plurality of tie rods according to claim 1.

According to a further aspect of the invention, a titling converter is provided, in which a first element, which is the vessel, is bound to a second element, i.e. the trunnion ring, by means of the aforesaid suspension system. In particular, the tie rods are restrained at a first end to the vessel and at a second end to the trunnion ring; furthermore, the two ends of each tie rod are integrally and respectively fixed to the vessel and to the trunnion ring.

The fact of providing tie rod position adjustment means, arranged at an inner side of the respective end support, allows to compensate for distance errors between the resting surfaces, those integral with the first element and those integral with the second element.

In a first variant of the invention, said tie rod position adjustment means comprise a second multi jackbolt tensioner.

In a second variant of the invention, said tie rod position adjustment means comprise, instead, a spacer resting on said inner side and a tightening nut tightened on said spacer, said spacer and said tightening nut having mutually mating surfaces substantially shaped as an annular portion of a spherical cap.

If the tie rod bar has a tapered and elongated shape in the part straddling between the constraints, a preload can be assigned to the tie rod bar, and it can be constrained, preferably by using the multi jackbolt tensioner and the spacer-tightening nut assembly of the second variant at each end. Instead, if such elongated shape is not provided in the part straddling the two constraints or if it is less accentuated, it is preferable to use the first variant comprising an outer tensioner and an inner tensioner at the two ends of the bar.

In particular, the restrainable joint tie rod object of the present invention has the following advantages:
- it can easily absorb thermal expansions of the elements to which it is connected, by exploiting only the elasticity of the tie rod bar itself;
- it effectively absorbs the vibrations which are generated during machining or processes which concern the elements to which it is connected;
- it effectively absorbs the forces generated by the inertia of the elements to which it is connected, at the beginning and at the end of the rotation thereof;
- it does not require any maintenance with respect to traditional systems which use ball joints subject to wear, with saving in terms of maintenance hours;
- the low bending rigidity of the elastic bar can limit the bending load on the bar generated by the expansions to which the elements to which the tie rod is connected are subjected;
- the restrained beam configuration allows to withstand high loads also in strut configuration of the tie rod;
- it is extremely simple to assemble.

The dependent claims describe preferred embodiments of the invention.

### Brief description of the figures

Further features and advantages of the present invention will be apparent in light of the detailed description of preferred, but not exclusive, embodiments, of a tie rod illustrated by the way of non-limitative example, with reference to the accompanying drawings, in which:
Figure 1 is a side, partly in section, view of a first embodiment of the tie rod of the invention applied to a converter;
Figure 2 is an enlarged section view of a part in Figure 1;
Figure 3 is a side, partly in section, view of a second embodiment of the tie rod of the invention.

The same reference numbers in the figures identify the same elements or components.

### Detailed description of preferred embodiments of the invention

The tie rod of the invention, globally indicated by reference numeral 1, comprises in all embodiments:
- a longitudinal bar 17, defining a longitudinal axis and provided with threaded ends 47, 48;
- locking elements to lock the ends of bar 17 to respective end supports 2, 2'.

The end supports 2, 2' are provided with a respective hole for the passage of the bar.

An inner side, facing towards the corresponding inner side of the other end support 2', 2, and an opposite outer side, facing the opposite part with respect to the respective inner side, are defined in each end support 2, 2' of the tie rod. Each inner side comprises an inner surface 20, while each outer side comprises an outer surface 21.

Preferably, the inner side and the outer side of each end support 2, 2' are mutually parallel, and thus the inner surface 20 and the outer surface 21 of each end support 2, 2' are mutually parallel.

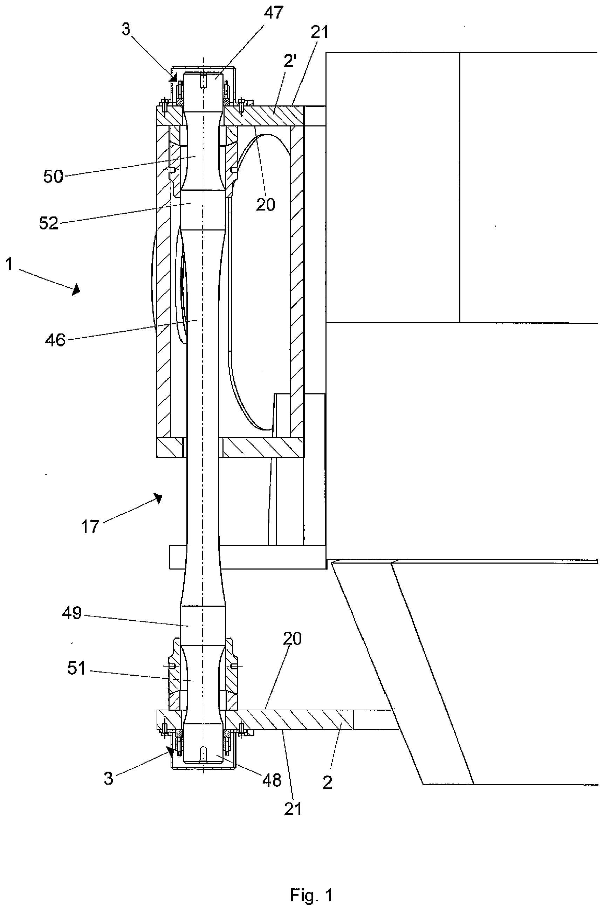

The longitudinal bar 17 (Figure 1) comprises a central portion 46, delimited on one side by an intermediate threaded portion 52, and on the other by an intermediate treaded portion 49 and two side portions 50, 51.

The side portion 50 is arranged between the threaded end 47 and the intermediate threaded portion 52, while the side portion 51 is arranged between the threaded end 48 and the intermediate threaded portion 49.

Figures from 1 to 2 show a preferred first embodiment of the tie rod of the invention.

The locking elements comprise at each end of the bar 17:
- a multi jackbolt tensioner 3;
- tie rod position adjustment means 30.

In particular, in the configuration with the tie rod locked at the ends, the multi jackbolt tensioner 3 at each end support 2, 2' is arranged at an outer end of the respective end support; while the tie rod position adjustment means 30 are arranged at an inner side of the respective end support.

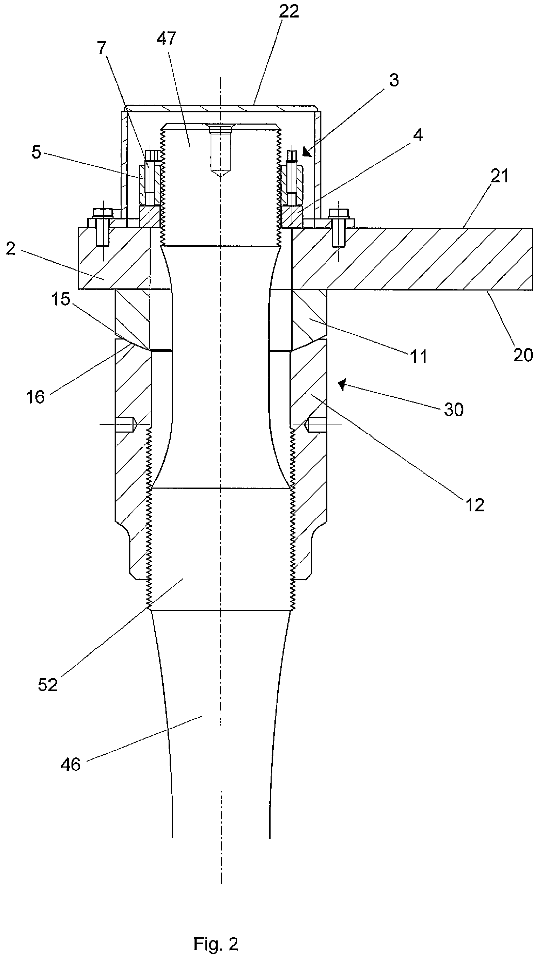

Said multi jackbolt tensioner 3 (Figure 2) comprises, in the configuration with the tie rod locked at the ends, a thrust washer 4, arranged on the outer side of the respective end support, and a nut body 5 externally tightened onto the thrust washer 4. The nut body 5 has a plurality of first threaded through holes, arranged uniformly along a circumference and parallel to the longitudinal axis of bar 17, in which the respective jackbolts 7 are tightened to generate a thrust force against the thrust washer 4.

The thrust washer 4 rests with a first flat surface thereof on the outer surface 21 of the respective end support 2, 2'; while the second flat surface of the thrust washer 4, opposite to said first flat surface, is tightened by the nut body 5 and the thrust screws 7. A considerable axial thrust force is generated against the thrust washer 4 by tightening the jackbolts 7. The jackbolts 7 have a small friction diameter and can consequently generate a high thrust force with a relatively low torque. The loads are transmitted through the body of the nut 5, fastened onto the respective threaded end 47, 48 of bar 17, in turn. The thrust washer 4 transfers the force, while protecting the outer surface 21 of the end support. The thrust force produced by the thrust screws 7 and the opposite reaction force exerted by the bar create a high tightening force on the end support.

Protective lids 22, made of steel or stainless steel, are advantageously provided to protect the multi jackbolt tensioners 3, so as to preserve them from possible intrusions of dust or dirt.

In this first embodiment of the tie rod of the invention (Figures 1-2), the means 30 for adjusting the position of the tie rod with respect to the end supports 2, 2' comprise in the configuration with the tie rod locked at the ends:
- a spacer 11 resting on the inner side of the respective end support 2, 2',
- and a tightening nut or sleeve 12 tightened on the spacer 11.

Advantageously, the spacer 11 and the tightening nut 12 have mutually mating surfaces 15, 16 substantially shaped as an annular portion of a spherical cap. The spacer 11 rests with a first flat surface thereof on the inner surface 20 of the respective end support 2, 2'. The spherical-cap-shaped mating surfaces 15, 16 allow a rotation during the step of assembly so that these mating surfaces always mutually fit. The flat surface of each spacer 11 is deformed following the fastening of the nut 12 on the respective intermediate threaded portion 52, 49, so that the contact between said flat surface and the inner surface 20 is maximized so as to obtain a continuous resting.

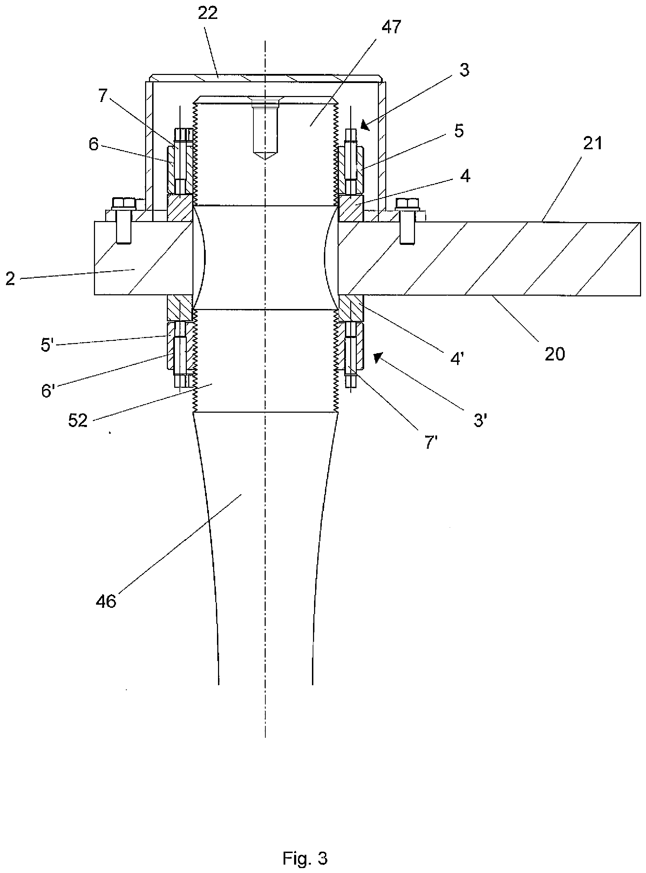

Figure 3 shows a preferred second embodiment of the tie rod of the invention.

This second embodiment comprises a first multi jackbolt tensioner 3, equal to that of Figure 2 and arranged at an outer side of the respective end support; while the tie rod position adjustment means 30, arranged at an inner side of the respective end support, comprise a second multi jackbolt tensioner 3'.

Said first multi jackbolt tensioner 3 and said second multi jackbolt tensioner 3' are arranged symmetrically with respect to the respective end support 2, 2'.

The second multi jackbolt tensioner 3' comprises, in the configuration with the tie rod locked at the ends, a thrust washer 4', arranged on the inner side of the respective end support, and a nut body 5' internally tightened onto the thrust washer 4'. The nut body 5' has a plurality of threaded through holes, arranged uniformly along a circumference and parallel to the longitudinal axis of bar 17, in which the respective jackbolts 7' are tightened to generate a thrust force against the thrust washer 4'.

The thrust washer 4' rests with a first flat surface thereof on the inner surface 20 of the respective end support 2, 2'; while the second flat surface of the thrust washer 4', opposite to said first flat surface is tightened by the nut body 5' and the thrust screws 7'. A considerable axial thrust force is generated against the thrust washer 4' by tightening the jackbolts 7'. Also the jackbolts 7' have a small friction diameter and can consequently generate a high thrust force with a relatively low torque. The loads are transmitted through the body of the nut 5', fastened onto the respective intermediate threaded portion 52, 49, in turn. The thrust washer 4' transfers the force, while protecting the inner surface 20 of the end support. The thrust force produced by the thrust screws 7' and the opposite reaction force exerted by the bar create a high tightening force on the end support, which is added to the tightening force produced by means of the jackbolts 7 of the outer tensioner.

In both embodiments of the tie rod of the invention, the elastic longitudinal bar 17 preferably has a circular section. However, other section shapes can be provided according to the designed longitudinal extension of the bar. Bar 17 is advantageously made of high-alloy steel, such as spring steel with high yield strength or other suitable steel with similar elasticity properties. Furthermore, the bar can be heat-treated (e.g. by means of hardening and tempering or solution-heat treatment according to the type of steel used) and can be provided with a surface treatment, e.g. based on nickel, chrome or other suitable element. The high-quality material used allows to withstand mechanical stress and also oxidation, which is very important in various contexts, such as for example that of oxygen converters, very well. In all cases, bar 17 is sized as a function of the intended application for the tie rod, so as to have a length and a thickness or diameter suited to operate in elastic field with infinite duration.

The tie rod object of the present invention can work as a suspension element connecting a first mechanical member to a second mechanical member.

For example, a plurality of restrained tie rods according to the invention can constitute suspension elements which connect, in a tilting oxygen converter, the vessel of the converter to the trunnion ring of said vessel (Figure 1) and which also perform a centering function between vessel and trunnion ring. In this case, the tie rods are restrained to a first end of the vessel and to a second end of the trunnion ring (Figure 1). The bars 17 of the tie rods are appropriately sized to operate as elastic support means for absorbing the thermal expansions which occur in this application context. In this case, the end supports 2, 2' will be part of respective fastening brackets welded or bolted to the vessel and the trunnion ring. The bars are locked at the ends to prevent the presence of relative moving parts and maintenance activities are eliminated or at least reduced as they are not subject to wear. The bars, working as tie rods or struts, are adjustable to compensate for possible lack of uniformity of the bar length, thus ensuring a correct positioning thereof.

## Claims

1. A tie rod (1) defining a longitudinal axis and comprising locking elements for locking the ends of the tie rod to respective end supports (2, 2'), the tie rod being able to cross said end supports (2, 2'),
**characterized in that**
said locking elements comprise, at each end support (2, 2'), a first multi jackbolt tensioner (3) and adjustment means for adjusting the position of the tie rod with respect to said end support,
and **in that**, in a configuration with tie rod locked at the ends, said first multi jackbolt tensioner (3) is arranged at an outer side (21) of the respective end support, while said adjustment means for adjusting the position of the tie rod are arranged at an inner side (20) of the respective end support.

2. A tie rod according to claim 1, wherein said first multi jackbolt tensioner (3) comprises, in the configuration with tie rod locked at the ends, a first thrust washer (4), arranged on the outer side of the respective end support, and a first nut body (5) externally tightened onto the first thrust washer (4), said first nut body (5) having a plurality of first threaded through holes (6), arranged uniformly along a circumference and parallel to said longitudinal axis, where first respective thrust screws (7) are tightened to generate a thrust force against said first thrust washer (4).

3. A tie rod according to claim 1, wherein said tie rod position adjustment means comprise a second multi jackbolt tensioner (3').

4. A tie rod according to claim 2 or 3, wherein said tie rod position adjustment means comprise a second multi jackbolt tensioner (3') comprising, in the configuration with tie rod locked at the ends, a second thrust washer (4'), arranged on the inner side of the respective end support, and a second nut body (5') tightened internally on the second thrust washer (4'), said second nut body (5') having a plurality of second threaded through holes (6'), arranged uniformly along a circumference and parallel to said longitudinal axis, where respective second thrust screws (7') are tightened to generate a thrust force against said second thrust washer (4').

5. A tie rod according to claim 3 or 4, wherein said first multi jackbolt tensioner (3) and said second multi jackbolt tensioner (3') are arranged symmetrically with respect to the respective end support.

6. A tie rod according to claim 1 or 2, wherein said tie rod position adjustment means comprise, in the configuration with tie rod locked at the ends, a spacer (11) resting on said inner side and a tightening nut (12) tightened on said spacer (11), said spacer (11) and said tightening nut (12) having mutually mating surfaces (15, 16) substantially shaped as an annular portion of a spherical cap.

7. A tie rod according to any one of the preceding claims, comprising a longitudinal bar (17), provided with threaded ends (47, 48) on which the respective first multi jackbolt tensioner (3) can be tightened, said bar comprising a central portion (46), delimited on one side by a first intermediate threaded portion (52) and on the other side by a second intermediate threaded portion (49), and two side portions (50, 51); the first side portion (50) being arranged between a first threaded end (47) and said first intermediate threaded portion (52), and the second side portion (51) being arranged between the second threaded end (48) and said second intermediate threaded portion (49).

8. A tie rod according to claim 7, wherein respective tie rod position adjustment means can be tightened on the first intermediate threaded portion (52) and on the second intermediate threaded portion (49).

9. A suspension system connecting a first element to a second element, comprising a plurality of tie rods according to any one of the preceding claims.

10. A tilting converter comprising a suspension system according to claim 9, wherein said first element is a vessel of the converter and said second element is a trunnion ring of said vessel, wherein said tie rods are restrained at a first end thereof to the vessel and at a second end thereof to the trunnion ring, and wherein the respective two end supports (2, 2') of each tie rod are integrally fixed to the vessel and the trunnion ring, respectively.
